# EUROPEAN PATENT SPECIFICATION

(11) **EP 2 942 534 B1**
(45) Date of publication and mention of the grant of the patent: **05.07.2017**
(21) Application number: 13869872.5
(22) Date of filing: 24.10.2013
(51) Int. Cl.: F16B 2/20, F16B 2/22, F16B 2/24, F16B 5/00

(54) **CONNECTOR FOR COMBINED FASTENING DEVICE**
VERBINDER FÜR KOMBINIERTE BEFESTIGUNGSVORRICHTUNG
RACCORD POUR DISPOSITIF DE FIXATION COMBINÉ

(30) Priority: 06.01.2013 CN 201310007688
(43) Date of publication of application: 11.11.2015
(73) Proprietor: Fuyang Youkai Kayak Boat Co. Ltd, Zhejiang 311400 (CN)
(72) Inventor: LUO, Enhao, Fuyang Zhejiang 311400 (CN)
(74) Representative: Cohausz & Florack
(86) International application number: PCT/CN2013/085834
(87) International publication number: WO 2014/106404

(56) References cited:
- WO-A1-94/01686
- CN-U- 201 696 407
- CN-U- 201 802 980
- CN-Y- 201 246 370
- JP-A- 2003 120 618
- US-A1- 2007 011 987

## Description

### TECHNOLOGY FIELD

This invention is a set of fastening multilayer connectors connected together. The connectors have flanges on both sides and are flat in the middle. This kind of connectors is applicable to connect rigid non-metallic parts that have grooves. By snapping or inserting the connector flanges into the parts grooves, the connector can connect the two parts tightly.

### BACKGROUND TECHNOLOGIES

The parts to be connected are usually made of rigid non-metallic materials, such as fiberglass, or plastic made by rotational molding, injection molding or blow molding. These parts have grooves at the junction to connect to another piece. The connector has flanges on both sides and flat in the middle. By snapping or inserting the connector flanges into the parts grooves, the connector can connect the two parts tightly Fiberglass product is generally handmade, so the final product is usually not as accurately made as the design; And plastic made by rotational molding, injection molding or blow molding is thermoplastic product, so the final plastic products usually deform after releasing from mold and cooling down. All these product deficiencies will lead to the difficulties of connecting the parts together tightly and perfectly. If allowing the groove tolerance to increase in the parts, it may increase the gap between the parts or the gap between the connector and groove, making it more difficult to be tightly fastened. US 2007/011987 discloses a connector of composite material type with a flat board and with flanges on the two sides. The flanges interlock into complementary recesses of adjacent joiner panels. This connection cannot be easily bent on the longitudinal direction, and the tensile resistance is not so great at the flanges. The flanges cannot be easily pulled out from the groove, and the whole structure is heavy.

### DESIGN CONTENT

This invention is to provide a solution to connect or assemble parts that are lack of accuracy at its grooves at the connection. This invented connector is longitudinally flexible or bendable, and the flanges on both sides of it are transformable into any shape to suit the groove of the parts to be connected. The connector is very strong latitudinally or laterally to resist bending and tensile forces. This invention is a continuous set of fastening connectors spirally connected together. It has a strip or band looking longitudinally, and the connectors have triangular or other shaped flanges on both sides and flat in between. The connector has an inner layer and an outer layer. The inner layer of the connector is a continuous set of metal wire or strip, forming into triangular or other shaped flanges on both sides and flat in between. The outer layer of the connector is made of elastic or flexible non-metallic materials. The inner layer is placed inside the outer layer. The connector is applicable to rigid non-metallic parts that has triangular or other shaped grooves. By snapping or inserting the connector flanges into the parts grooves, the connector can connect the two parts tightly.

The inner connecting member may also be made of metal strip segments by cutting, punching, sawing into a similar spiral multilayer body.

The outer connecting member may also wrap around or suit the inner layer member.

At the flat middle part, between the outer and inner layers, more metal wire can be added in the longitudinal direction.

### USEFUL EFFECTS

Easy to connect to assemble or disassemble: the outer connector of the present invention is made of soft, elastic or flexible material, so it is easy to snap into grooves and to be removed.

Reduced weight: the outer connecting member of the present invention is made of soft, elastic or flexible material, so the connecting member is lighter than metal or fiberglass materials.

Gap reduction mechanism: the outer connecting member of the present invention is made of elastic or soft material, so it can form a tight connection at the connector and the parts grooves.

Reduced production cost or connector flexibility: the present invented connector can be bent casily longitudinally, so the invented connector can be used on the same connection that has the same or similar groove and the same or similar length of the connecting part, without having to make another mould or product for this connection.

### DRAWING DESCRIPTION

Figure 1 is the cross-sectional view of the fastening connector, having the longitudinal direction going into the page.
Figure 2 is a 3D perspective view of the inner member of the fastening connector.
Figure 3 is a 3D perspective view of the combination of the inner and outer members of the fastening connector.

In which:
Point 1 is the outer member made of non-metallic soft, elastic or flexible material.
Point 2 is the inner member made of spring steel wire.

### DETAILED OPERATION METHOD

The following is an example on how to operate the fastening connector with the drawings:

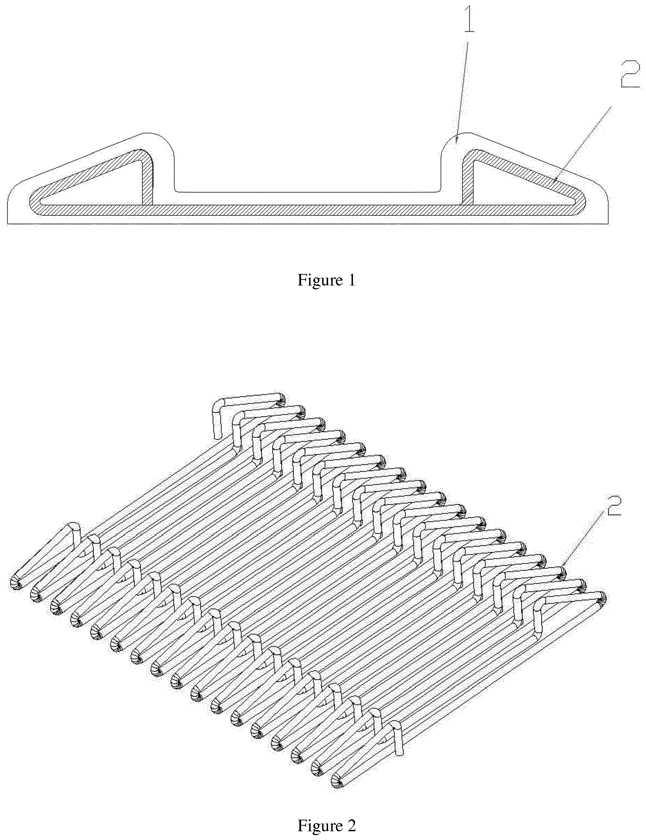

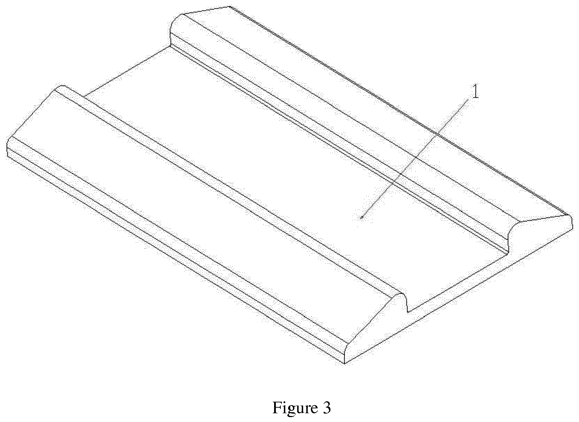

As shown in figure 1 to 3, the present invention is a set of fastening connectors. The connect is strip or band looking longitudinally, and has two flanges on both sides and flat in between latitutinally or laterally. The invented connector has an inner layer and an outer layer. The inner spring steel wire 2, may also be replaced by a metal rod or a metal strip into a spiral shape, processed into two triangular or other shaped flanges. The inner layer may be made of metal processed into two side flanges, with the middle being flat, and multilayer spiral body functions made by cutting, punching, sawing, etc. The outer layer 1, is made of non-metallic soft, elastic or flexible material, or it can also be made of nylon or rubber materials. It wraps around the inner layer, and fills the voids in the inner layer. The outer connecting member may also wrap around or suit the inner layer member. At the flat middle part, between the outer and inner layers, more metal wire can be added in the longitudinal direction. The inner connector can be used alone as a connector to use, and also can be used by having part of the outer layer combined together to use as a connector.

The connector is suitable to connect rigid non-metallic material parts, such as hand-made fiberglass assembly boats and watercrafts, as well as plastic assembly boats and watercrafts made by rotational molding, injection molding or blow molding. Examples are: assembly kayak, assembly rowboat and assembly stand up board which have triangular grooves at their connecting parts, and require the use of fastening bands to assemble separated pieces together.

The present invention is also applicable to connect parts that are made of non-metallic materials with grooves.

## Claims

1. This invention is a set of fastening multilayer connectors connected together that has triangular flanges on both sides, and flat in between, wherein this invention is applicable to connect separated parts that are made by rigid non-metallic materials, which the parts have triangular grooves at the connection; by snapping into or inserting the fastening connector into the parts grooves, the separated parts can be connected tightly, **characterized in that**: the connector includes an inner layer (2) and an outer layer (1), with the inner layer (2) being metal wire, or strip formed in a spiral multilayer formation in triangular shape, and flat in between, and with the outer layer (1) made of non-metallic soft, elastic or flexible material, and fills the void in the inner layer (2).

2. According to fastening connector describes in 1, it may also be made of metal strip or band by cutting, punching, sawing into a similar spiral multilayer body.

3. According to fastening connector describes in 1, the outer layer member (1) may also wrap around or suit the inner layer member (2).

4. According to fastening connector describes in 1, at the flat middle part, between the outer and inner layers (1, 2), more metal wire can be added in the longitudinal direction.

## Patentansprüche

1. Diese Erfindung ist ein Satz mehrlagiger, miteinander verbundener Befestigungsverbinder, die an beiden Seiten dreieckige Flansche aufweisen und dazwischen flach sind, wobei diese Erfindung dafür anwendbar ist, getrennte Teile zu verbinden, die aus starren, nichtmetallischen Materialien bestehen, wobei die Teile dreieckige Nuten an der Verbindungsstelle aufweisen; wobei durch Einschnappen oder Einführen des Befestigungsverbinders in die Nuten der Teile die getrennten Teile fest miteinander verbunden werden können, **dadurch gekennzeichnet, dass** der Befestigungsverbinder eine innere Lage (2) und eine äußere Lage (1) umfasst, wobei die innere Lage (2) ein Metalldraht oder ein Streifen ist, der in einer spiralförmigen mehrlagigen Anordnung in dreieckiger Form und dazwischen flach ausgebildet ist, und wobei die äußere Lage (1) aus einem nichtmetallischen weichen, elastischen oder flexiblen Material besteht, und den Hohlraum in der inneren Lage (2) ausfüllt.

2. Gemäß dem Befestigungsverbinder beschrieben in 1, kann es auch aus einem Metallstreifen oder -band durch Schneiden, Stanzen, Sägen zu einem ähnlichen spiralförmigen, mehrlagigen Körper ausgebildet werden.

3. Gemäß dem Befestigungsverbinder beschrieben in 1, kann das Element der äußeren Lage (1) auch um das Element der inneren Lage (2) herumgewickelt sein oder an dieses passen.

4. Gemäß dem Befestigungsverbinder beschrieben in 1, können an dem flachen mittleren Teil zwischen der äußeren und der inneren Lage (1, 2) weitere Metalldrähte in Längsrichtung hinzugefügt werden.

## Revendications

1. Cette invention est un ensemble de connecteurs de fixation multicouches interconnectés qui présente des brides triangulaires des deux côtés, et plates au milieu, où cette invention est applicable au raccordement de pièces séparées qui sont constituées de matériaux non métalliques rigides, lesdites pièces ayant des rainures triangulaires au niveau du raccordement; où en enclenchant ou en insérant le connecteur de fixation dans les rainures des pièces, les pièces séparées peuvent être fermement reliées, **caractérisé en ce que**: le connecteur comporte une couche intérieure (2) et une couche extérieure (1), avec la couche intérieure (2) étant un fil métallique, ou une bandelette formée en une formation multicouche en spirale de forme triangulaire, et plate au milieu, et avec la couche extérieure (1) étant constituée de matériau non métallique souple, flexible ou élastique, et remplissant le vide dans la couche intérieure (2).

2. Conformément au connecteur de fixation décrit en 1, celui-ci peut également être constitué d'une bandelette ou bande métallique par découpage, poinçonnage, sciage en un corps multicouche en spirale similaire.

3. Conformément au connecteur de fixation décrit en 1, le membre couche extérieure (1) peut également envelopper ou être adapté au membre couche intérieure (2).

4. Conformément au connecteur de fixation décrit en 1, au niveau de la partie centrale plate, entre les couches extérieure et intérieure (1, 2), plus de fils métalliques peuvent être ajoutés dans la direction longitudinale.
